# EUROPÄISCHE PATENTSCHRIFT

(11) **EP 2 314 384 B1**
(45) Veröffentlichungstag und Bekanntmachung des Hinweises auf die Patenterteilung: **31.12.2014**
(21) Anmeldenummer: 10180712.1
(22) Anmeldetag: 28.09.2010
(51) Int. Cl.: B05C 17/01

(54) **Auspressvorrichtung**
Extruder
Dispositif de compression

(30) Priorität: 21.10.2009 DE 102009045891
(43) Veröffentlichungstag der Anmeldung: 27.04.2011
(73) Patentinhaber: HILTI Aktiengesellschaft, 9494 Schaan (LI)
(72) Erfinder: Hefele, Christian, 87739, Breitenbrunn (DE); Ostermeier, Peter, 86911, Diessen (DE); Strobel-Schmidt, Rainer, 86825, Bad Wörishofen (DE); Lederle, Hans Peter, 87471, Durach (DE)
(74) Vertreter: Hilti Aktiengesellschaft Corporate Intellectual Property

(56) Entgegenhaltungen:
- DE-U1-202004 003 925
- US-A- 5 672 155
- US-A1- 2004 045 982
- US-A1- 2008 047 974

## Beschreibung

Die Erfindung betrifft ein Steuerverfahren zum Steuern einer Auspressvorrichtung für Massen enthaltende Gebinde gemäss dem Oberbegriff des Patentanspruchs 1.

Eine derartige Auspressvorrichtung dient dem Ausbringen von in Gebinden verpackten Massen, wie Mörtel- oder Dichtmassen, an einem Applikationsort. Gebinde umfassen beispielsweise Kartuschen mit einem oder mehreren Aufnahmeräumen für eine oder mehrere Komponenten der auszubringenden Masse, die direkt oder z. B. in Folienbeutel verpackt in den Aufnahmeräumen der Kartusche vorgesehen sind. Der Begriff "Gebinde" umfasst zudem mit einer oder mehreren Komponenten der auszubringenden Masse befüllte Folienbeutel, die in einen separaten oder an der Auspressvorrichtung angeordneten Aufnahmekörper eingesetzt werden.

Aus der US 5,921,437 ist eine Auspressvorrichtung für Massen enthaltende Gebinde bekannt, die einen Aufnahmeraum für das Gebinde, eine gegenüber dem Aufnahmeraum verschiebbare Kolbenstange, einen Motor zum Bewegen der Kolbenstange, ein Betätigungselement zum Erzeugen eines Steuersignals beim Betätigen des Betätigungselementes und eine Steuereinheit zum Steuern des Motors aufweist. Bei der Betätigung der Auspressvorrichtung wird z. B. über ein an der Kolbenstange angeordnetes, auf das Gebinde einwirkendes Druckstück die im Gebinde befindliche Masse mit Druck beaufschlagt und durch eine Austrittsöffnung des Gebindes ausgepresst. Um ein Nachfliessen der Masse nach Beendigung des Auspressvorgangs zu verhindern, wird die Kolbenstange am Ende des Auspressvorgangs um einen willkürlichen, von der Steuereinheit bestimmten Rückfahrweg zurückbewegt. Dazu müssen zwei Stellgrössen vom Anwender eingestellt werden, welche insbesondere in Bezug auf die Art des Gebindes und auf die Umgebungsbedingungen abgestimmt zu wählen sind.

Nachteilig an der bekannten Lösung ist, dass der Anwender zwei Einstellungen vornehmen muss, welche während des Auspressvorgangs beide Hände braucht. Neben dem aufwändigen Handling ist eine konstante Dosierung beim Ausbringen der Masse mit der bekannten Auspressvorrichtung nicht gegeben. Weiter muss das Betätigungselement durch die Anordnung innerhalb der Verbindung zwischen der Stromquelle und dem Motor ausreichend massiv ausgebildet werden, um die Motorleistung schalten zu können.

Ein gattungsgemässes Steuerverfahren für eine Auspressvorrichtung für Massen enthaltende Gebinde geht aus der nächstkommenden US2008/047974A1 hervor. Weitere Steuerverfahren für Auspressvorrichtungen für Massen enthaltende Gebinde sind US 5 672 155 A, der US2004/045982 A1 und der DE 20 2004 003 925 U1 bekannt.

Aufgabe der Erfindung ist es, ein Steuerverfahren für eine Auspressvorrichtung für Massen enthaltende Gebinde zu schaffen, mit dem eine Beschädigung der Auspressvorrichtung, insbesondere nach dem Einlegen eines neuen Gebindes, verhindert wird.

Die Aufgabe wird durch die Merkmale des Anspruchs 1 gelöst. Vorteilhafte Weiterbildungen sind in den Unteransprüchen dargelegt.

Ein erfindungsgemässes Steuerverfahren ist dadurch gekennzeichnet, dass die Position der zumindest einen Kolbenstange nach Beendigung der Vorwärtsbewegung erfasst wird und der durchzuführende Rückfahrweg entsprechend dem maximal zur Verfügung stehenden Weg angepasst wird, sofern dieser kleiner als der vorbestimmte Rückfahrweg ist.

Gemäss der Erfindung weist die Steuereinheit eine Leistungsbaugruppe zum Verbinden des Motors mit einer Stromversorgung sowie einen separaten Signaleingang aufweist, der mit dem Betätigungselement elektrisch verbunden ist, und die Leistungsbaugruppe verbindet entsprechend auf das Steuersignal am ersten Signaleingang den Motor mit der Stromversorgung.

Da das Betätigungselement direkt mit der Steuereinheit verbunden und somit ausserhalb der Verbindung zwischen der Stromquelle und dem Motor angeordnet ist, muss dieser nur mit einer Hilfsspannung versorgt werden. Die Steuereinheit umfasst eine Steuerbaugruppe und wirkt mittels dem Betätigungselementes und einer eigenen Logik auf die Leistungsbaugruppe ein, welche den Motor mit der Stromversorgung verbindet. Entsprechend klein und einfach kann das Betätigungselement ausgebildet werden. Das Betätigungselement, benötigt nur einen kleinen Bauraum innerhalb des Gehäuses der Auspressvorrichtung und ist kostengünstig herstellbar. Aufgrund des geringen Stroms können für die elektrische Verbindung zwischen dem Betätigungselement und der Steuereinheit Kabel mit einem kleinen Querschnitt verwendet werden, welche weniger Bauraum innerhalb des Gehäuses der Auspressvorrichtung benötigen und günstig im Einkauf sind.

Das Betätigungselement ist z. B. ein Schalter und vorteilhaft ein Taster, die beispielsweise elektromechanisch ausgebildet sind. Die Stromquelle umfasst beispielsweise ein mit einem Stromnetz verbundenes Netzkabel oder eine vorteilhaft wiederaufladbare Batterie, welche weiter vorteilhaft auswechselbar an einem Gehäuse der Auspressvorrichtung anordnenbar ist. Der Motor ist beispielsweise ein Bürstenmotor oder ein bürstenloser Motor, der in Abhängigkeit der Art des bezogenen Stroms und gegebenenfalls dessen Transformierung ein Gleichstrommotor oder ein Wechselstrommotor ist.

Vorzugsweise ist das Betätigungselement zusätzlich ein Geschwindigkeitsregler, so dass in Abhängigkeit des beim Betätigen des Betätigungselementes zurückgelegten Weges die Drehzahl des Motors angepasst wird. Dies ermöglicht dem Anwender bedarfsweise mit hoher Geschwindigkeit eine grosse Menge der auszupressenden Masse auszubringen oder z. B. für präzise Anwendungen mit geringer Geschwindigkeit gezielt kleine Mengen der der auszupressenden Masse auszubringen. Das Betätigungselement ist zu diesem Zweck vorteilhaft ein elektromechanischer Taster, der ein Potentiometer umfasst.

Bevorzugt ist eine Dosiereinstelleinheit zur Einstellung der pro vollständig durchgeführten Hub auszubringenden Menge der Masse vorgesehen, welche über einen separaten Signaleingang an der Steuereinheit mit dieser elektrisch verbunden ist. Da die Dosiereinstelleinheit direkt mit der Steuereinheit verbunden und somit ausserhalb der Verbindung zwischen der Stromquelle und dem Motor angeordnet ist, muss diese nur mit einem Hilfsstrom versorgt werden. Entsprechend klein und einfach kann die Dosiereinstelleinheit ausgebildet werden. Vorteilhaft ist die Dosiereinstelleinheit ein Potentiometer. Die Dosiereinstelleinheit weist vorteilhaft eine Stellung "Null", in welcher bei Betätigung des Betätigungselementes der Motor nicht mit der Stromquelle verbunden wird, und eine Stellung "unendlich" auf, in welcher beim Betätigen des Betätigungselementes bis zum Freigeben desselben permanent Masse ausgebracht wird. Zwischen diesen beiden Stellungen können an der Dosiereinstelleinheit auch Zwischenstellungen eingestellt werden, so dass bei der Betätigung des Betätigungselementes von der Auspressvorrichtung eine entsprechend definierte Menge der auszupressenden Masse ausgebracht wird.

Vorzugsweise ist eine Positionserfassungseinheit zum Erfassen der Position der zumindest einen Kolbenstange vorgesehen, welche über einen separaten Signaleingang an der Steuereinheit mit dieser elektrisch verbunden ist. Da die Positionserfassungseinheit direkt mit der Steuereinheit verbunden und somit ausserhalb der Verbindung zwischen der Stromquelle und dem Motor angeordnet ist, muss diese nur mit einem Hilfsstrom versorgt werden. Entsprechend klein und einfach kann die Positionserfassungseinheit ausgebildet werden. Vorteilhaft umfasst die Positionserfassungseinheit ein Potentiometer. Anhand der Positionserfassungseinheit kann zu jedem Zeitpunkt des Auspressvorgangs die Position der zumindest einen Kolbenstange festgestellt werden.

Bevorzugt ist eine Anzeigeeinheit vorgesehen, welche mit der Steuereinheit elektrisch verbunden ist und welche nach Erreichen des vollständig durchgeführten Hubs ein von dem Anwender wahrnehmbares Signal erzeugt. Somit kann der Anwender feststellen, wie viel der auszupressenden Masse bereits ausgebracht wurde beziehungsweise wie viel der auszupressenden Masse noch für weitere Auspressvorgänge zur Verfügung steht. Vorteilhaft ist die Anzeigeeinheit über einen separaten Signaleingang an der Steuereinheit mit dieser elektrisch verbunden. Alternativ ist die Anzeigeeinheit indirekt über ein elektrisches Bauteil der Auspressvorrichtung, beispielsweise über die Positionserfassungseinheit mit der Steuereinheit elektrisch verbunden.

Vorzugsweise erzeugt die Anzeigeeinheit ein akustisches Signal, welches einfach vom Anwender wahrnehmbar ist. Alternativ oder ergänzend dazu umfasst die Anzeigeeinheit eine visuell wahrnehmbare Anzeige, welche als eine Füllstandsanzeige dienen kann.

Bevorzugt ist der Steuereinheit zumindest ein Spannungsregler vorgeschaltet, welche den Strom der Stromquelle beispielsweise von Wechselstrom auf Gleichstrom umtransformiert oder die Stromspannung aus der Stromquelle auf die Stromspannung der Bauteile der Auspressvorrichtung anpasst. Ein Spannungsregler begrenzt vorteilhaft die Spannung aus der Stromquelle für die Steuereinheit. Des Weiteren kann ein weiterer den entsprechenden Bauteilen vorgeschalteter Spannungsregler die maximale Spannung der nachfolgenden Bauteile begrenzen und eine zusätzliche Sicherheit darstellen, falls eine ebenfalls als Spannungsregler wirksame Pulsweitenmodulation fehlerhaft sein sollte. Vorteilhaft ist zudem eine Sicherung, vorteilhaft eine elektronische Sicherung, vorgesehen, die die maximale Spannung innerhalb der Auspressvorrichtung überwacht. Ist die Auspressvorrichtung batteriebetrieben Auspressvorrichtung, kann durch die Anordnung eines vorgeschalteten Spannungsreglers eine Batterie mit einer Stromspannung verwendet werden, welche grösser als die Stromspannung der Bauteile der Auspressvorrichtung ist, für welche sie ausgelegt sind. Dadurch lassen sich längere Betriebszeiten einer batteriebetriebenen Auspressvorrichtung realisieren und bei einer fallenden Betriebsspannung beispielsweise der Batterie, welche zu Leistungseinbussen oder Charakteristikveränderungen des angeschlossenen Motors führen, verhindert werden.

Das gattungsgemässe Steuerverfahren zum Steuern einer Auspressvorrichtung für Massen enthaltende Gebinde, mit einem Aufnahmeraum für das Gebinde, mit zumindest einer gegenüber dem Aufnahmeraum verschiebbaren Kolbenstange, mit einem Motor zum Bewegen der zumindest einen Kolbenstange, mit einem Betätigungselement zum Erzeugen eines Steuersignals beim Betätigen des Betätigungselementes und mit einer Steuereinheit zum Steuern des Motors, welche eine Leistungsbaugruppe zum Verbinden des Motors mit einer Stromversorgung sowie einen separaten Signaleingang aufweist, der mit dem Betätigungselement elektrisch verbunden ist, wobei die Leistungsbaugruppe entsprechend auf das Steuersignal an diesem Signaleingang den Motor mit der Stromversorgung verbindet, umfasst die folgenden Schritte:
a) Erfassen der Betätigungszeit, des Betätigungselementes durch die Steuereinheit und
b) automatisches Ansteuern des Motors durch die Steuereinheit zum Zurückbewegen der zumindest einen Kolbenstange um einen vorbestimmten Rückfahrweg, sofern die Betätigungszeit eine vorbestimmte Zeitdauer überschreitet.

Die zumindest eine Kolbenstange wird somit automatisch zurückgefahren, wenn die Vorwärtsbewegung beziehungsweise der Vorschub der zumindest einen Kolbenstange bis zur Erzeugung eines Überdrucks im Gebinde dauerte. Durch das Zurückfahren der zumindest einen Kolbenstange wird der unter Druck stehenden Masse ein Freiraum, an der der Auspressöffnung gegenüberliegenden Seite des Gebindes zur Verfügung gestellt, so dass sich die unter Druck stehende Masse in die Richtung dieser Seite ausdehnen kann und der Überdruck im Gebinde sich sofort abbaut. Dadurch wird ein Nachfliessen der auszupressenden Masse nach Beendigung des Auspressvorgangs sicher verhindert.

Der vorbestimmte Rückfahrweg ist insbesondere von den geometrischen Verhältnissen des Gebindes sowie von dem Auspressverhalten der auszupressenden Masse abhängig.

Die vorbestimmte Zeitdauer wird entsprechend dem Auspressverhalten der auszupressenden Masse bestimmt. Die vorbestimmte Zeitdauer entspricht vorteilhaft der Zeit beim Auspressvorgang, bei welcher ein Druck im Gebinde aufgebaut wird, der nach Beendigung des Auspressvorgangs zu einem Nachfliessen der auszupressenden Masse führen würde. Bei einer viskosen Mörtelmasse liegt die vorbestimmte Zeitdauer vorteilhaft im Bereich von 0.8 bis 2-0 Sekunden.

Erfindungsgemäss wird die Position der zumindest einen Kolbenstange nach Beendigung der Vorwärtsbewegung erfasst und der durchzuführende Rückfahrweg entsprechend dem maximal zur Verfügung stehenden Weg angepasst, sofern dieser kleiner als der vorbestimmte Rückfahrweg ist. Damit wird eine Beschädigung der Auspressvorrichtung insbesondere nach dem Einlegen eines neuen Gebindes verhindert, wenn sich die zumindest eine Kolbenstange in Bezug auf ihre Vorwärtsbewegung in ihrer hintersten Stellung befindet. Oftmals weist die Auspressvorrichtung einen rückseitigen Wandabschnitt auf, welcher den Aufnahmeraum begrenzt und durch welchen die zumindest eine Kolbenstange hindurchgeführt ist. Ohne die Anpassung des Rückfahrweges könnte die zumindest eine Kolbenstange sich mit diesem Wandabschnitt verklemmen, so dass der Wandabschnitt und/oder die zumindest eine Kolbenstange beschädigt werden. Dies führt gegebenenfalls zu Funktionsstörungen bis zu einem Totalausfall der Auspressvorrichtung.

Bevorzugt wird über die Dosiereinstelleinheit die pro vollständig durchgeführten Hub auszubringende Menge der Masse eingestellt und bei einer erneuten Betätigung des Betätigungselementes die zumindest eine Kolbenstange um die Summe aus dem aus der Voreinstellung resultierenden Weg und dem zuvor erfolgten Rückfahrweg vorwärtsbewegt. Dadurch wird das Ausbringen einer reproduzierbaren Menge der aushärtbaren Masse über den gesamten Auspressvorgang gewährleistet.

Vorzugsweise wird nach dem Loslassen des Betätigungselementes, bevor der Hub vollständig durchgeführt ist, bei einer erneuten Betätigung des Betätigungselementes die zumindest eine Kolbenstange maximal um die Summe aus dem verbleibenden Restweg sowie dem etwaig durchgeführten Rückfahrweg vorgeschoben. Dadurch sind eine beliebige Anzahl von Unterbrechungen während einem Dosiervorgang möglich, wobei nach dem Erreichen der vorbestimmten Menge der auszupressenden Masse der Auspressvorgang automatisch gestoppt wird.

Alternativ dazu wird nach einem Unterbruch, der vor der Ausführung des kompletten Hubs erfolgt, der Dosiervorgang erneut gestartet, wobei ein etwaig durchgeführter Rückfahrweg aufaddiert und die zumindest eine Kolbenstange um den Weg aus der Summe vorwärtsbewegt wird.

Vorteilhaft wird nach dem Einlegen eines Gebindes in den Aufnahmeraum der Auspressvorrichtung die Betätigungszeit des Betätigungselementes erst nach zumindest einer zweimaligen Betätigung des Betätigungselementes erfasst. Zu Beginn des Auspressvorgangs kann zuerst eine bestimmte Menge, auch Verwurf genannt, der auszupressenden Masse ausgebracht werden, um eine ausreichende Qualität der ausgebrachten Masse am Applikationsort zu gewährleisten. Ist an der Auspressöffnung ein Mischelement vorgesehen, wird bei diesem Vorgang zuerst dieses vor dem effektiven Ausbringen der Masse gefüllt und dadurch die ausreichende Durchmischung z. B. einer mehrkomponentigen Masse sichergestellt.

Vorzugsweise wird bei Erfassen eines Stillstandes der Vorwärtsbewegung der zumindest einen Kolbenstange vor der Beendigung des vollständig durchgeführten Hubs der Motor für eine Zurückbewegung der zumindest einen Kolbenstange um einem vorbestimmten Rückfahrweg automatisch umgeschaltet, womit eine Überlast des Motors und/oder des Antriebsstrangs wie auch der zumindest einen Kolbenstange vermieden wird. Beispielsweise wird die Grösse des von dem Motor bezogenen Stroms überwacht und nach dem Überschreiten eines bestimmten Wertes der Umschaltvorgang durch die Steuereinheit vorgenommen wird. Alternativ wird ein Stillstand der Vorwärtsbewegung der zumindest einen Kolbenstange von einer Positionserfassungseinheit erfasst, welche im Fall des Stillstands ein Steuersignal an die Steuereinheit sendet.

Bevorzugt ist der Rückfahrweg bei einem Stillstand der Kolbenstange vor der Beendigung des vollständig durchgeführten Hubs grösser als der Rückfahrweg bei einer die vorbestimmte Zeitdauer überschreitenden Betätigungszeit des Betätigungselementes, womit der verhältnismässig grosse Überdruck im Gebinde vorteilhaft abgebaut wird.

Vorzugsweise verbindet die Leistungsbaugruppe der Steuereinheit erst dann den Motor mit der Stromversorgung, wenn bei der Betätigung des Betätigungselementes ein vordefinierter Schwellwert überschritten wird, womit eine Sicherungsfunktion gegen eine unbeabsichtigte Betätigung der Auspressvorrichtung geschaffen ist. Beispielsweise wird von der Steuereinheit der bei der Betätigung des Betätigungselementes betätigte Weg erfasst und erst nach einem Betätigungsweg von beispielsweise 1 mm bis 4 mm, die Leistungsbaugruppe zum Verbinden des Motors mit der Stromversorgung geschaltet. Umfasst das Betätigungselement ein Potentiometer z. B. zur Geschwindigkeitsregulierung, kann der Schwellwert entsprechend eines von der Steuereinheit erfassten elektrischen Widerstandes festgelegt werden.

Die Erfindung wird nachstehend anhand eines Ausführungsbeispiels näher erläutert. Es zeigen:
- Fig. 1: Eine Auspressvorrichtung in Seitenansicht;
- Fig. 2: ein vereinfachtes Schaltschema der Auspressvorrichtung;
- Fig. 3: ein schematisches Diagramm eines Auspressvorgangs;
- Fig. 4: ein schematisches Diagramm eines Auspressvorgangs in einzelnen Teilschritten; und
- Fig. 5: ein schematisches Diagramm eines Auspressvorgangs bei einem Stillstand der Kolbenstange während dem Auspressvorgang.

Grundsätzlich sind in den Figuren gleiche Teile mit den gleichen Bezugszeichen versehen.

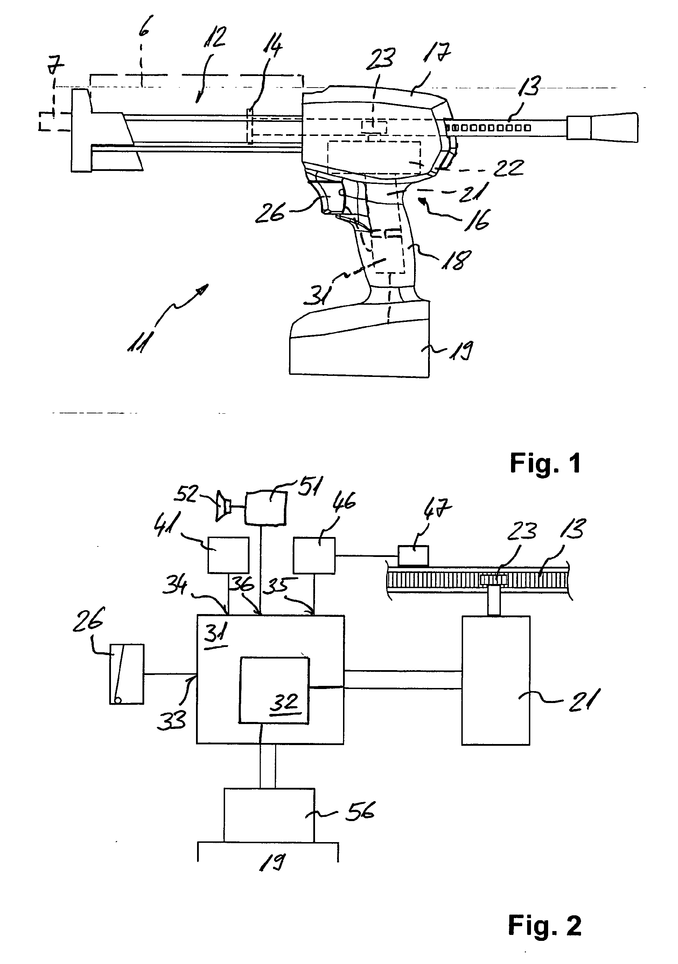

Die in der Figur 1 dargestellte Auspressvorrichtung 11 für Massen enthaltende Gebinde 6 weist einen Aufnahmeraum 12 für das Gebinde 6, eine gegenüber dem Aufnahmeraum 12 verschiebbare Kolbenstange 13 und eine elektrisch betätigbare Auspresseinrichtung 16 auf. An einem dem Aufnahmeraum 12 zugewandten Ende der Kolbenstange 13 ist ein Druckkolben 14 zur Beaufschlagung des Gebindes 6 beziehungsweise der darin befindlichen Masse vorgesehen. Beim Betätigen der Auspresseinrichtung 16 wird die Kolbenstange 13 in den Aufnahmeraum 12 vorgeschoben und dabei die im Gebinde 6 befindliche Masse mit Druck beaufschlagt, so dass diese durch die Austrittsöffnung 7 des Gebindes 6 ausgepresst wird. Die im enthaltende Gebinde 6 enthaltende Masse umfasst eine oder mehrere Komponenten. Bei einer mehrkomponentigen Masse wird vorteilhaft an der Austrittsöffnung 7 des Gebindes 6 ein Mischelement vorgesehen, welches eine vollständige Durchmischung der Komponenten für den Austritt aus der Austrittsöffnung 7sicherstellt.

Die Auspresseinrichtung 16 ist in einem Gehäuse 17 angeordnet, von dem sich ein Handgriff 18 erstreckt. Am freien Ende des Handgriffs 18 ist ein Batteriepack als Stromversorgung 19 lösbar festgelegt. Die Auspresseinrichtung 16 umfasst einen Motor 21, der über eine Getriebeanordnung 22 ein mit einer Zahnung an der Kolbenstange 13 kämmenden Antriebsrad 23 die Kolbenstange 13 bewegt.

Weiter ist am Handgriff 18 ein Taster als Betätigungselement 26 zum Erzeugen eines Steuersignals beim Betätigen des Betätigungselementes 26 vorgesehen. Zum Steuern des Motors 21 ist weiter eine Steuereinheit 31 vorgesehen, die eine Leistungsbaugruppe 32 zum Verbinden des Motors 21 mit der Stromversorgung 19 sowie mehrere Signaleingänge 33, 34, 35, 36 aufweist.

Wie in der Figur 2 schematisch dargestellt, ist das Betätigungselement 26 über einen ersten Signaleingang 33 elektrisch mit der Steuereinheit 31 verbunden. Das Betätigungselement 26 umfasst einen Potentiometer und ist somit neben einem Ein-/Ausschalter zusätzlich ein Geschwindigkeitsregler.

Weiter ist eine Dosiereinstelleinheit 41 zur Einstellung der pro vollständig durchgeführten Hub auszubringenden Menge der Masse vorgesehen, welche über einen zweiten Signaleingang 34 an der Steuereinheit 31 mit dieser elektrisch verbunden ist. Die Dosiereinstelleinheit 41 umfasst einen Potentiometer und weist neben einer Stellung "Null", in welcher bei Betätigung des Betätigungselementes 26 der Motor 21 nicht mit der Stromversorgung 19 verbunden und somit keine Masse ausgebracht wird, sowie einer Stellung "unendlich", in welcher entsprechend der Dauer der Betätigung des Betätigungselementes 26 der Motor 21 mit der Stromversorgung 19 verbunden ist, mehrere Einstellmöglichkeiten für das Ausbringen einer entsprechend definierten Menge der auszupressenden Masse auf.

Zudem ist eine Positionserfassungseinheit 46 zum Erfassen der Position der Kolbenstange 13 vorgesehen, die einen bei der Kolbenstange 13 angeordneten Sensor 47 umfasst und die über einen dritten Signaleingang 35 an der Steuereinheit 31 mit dieser elektrisch verbunden ist.

Weiter ist eine Anzeigeeinheit 51 vorgesehen, welche über einen vierten Signaleingang 36 an der Steuereinheit 31 mit dieser elektrisch verbunden ist und welche nach Erreichen des vollständig durchgeführten Hubs ein von dem Anwender wahrnehmbares Signal erzeugt. Die Anzeigeeinheit 51 umfasst einen Lautsprecher 52 zum Erzeugen eines akustischen Signals.

Der Steuereinheit 31 ist ein Spannungsregler 56 vorgeschaltet, welcher die Stromspannung der Stromversorgung 19 auf die Stromspannung zur Bestromung des Motors 21 transformiert. Alternativ oder ergänzend zu einem oder mehrerer Spannungsregler 56 eine vorteilhaft elektronische Spannungssicherung vorgesehen.

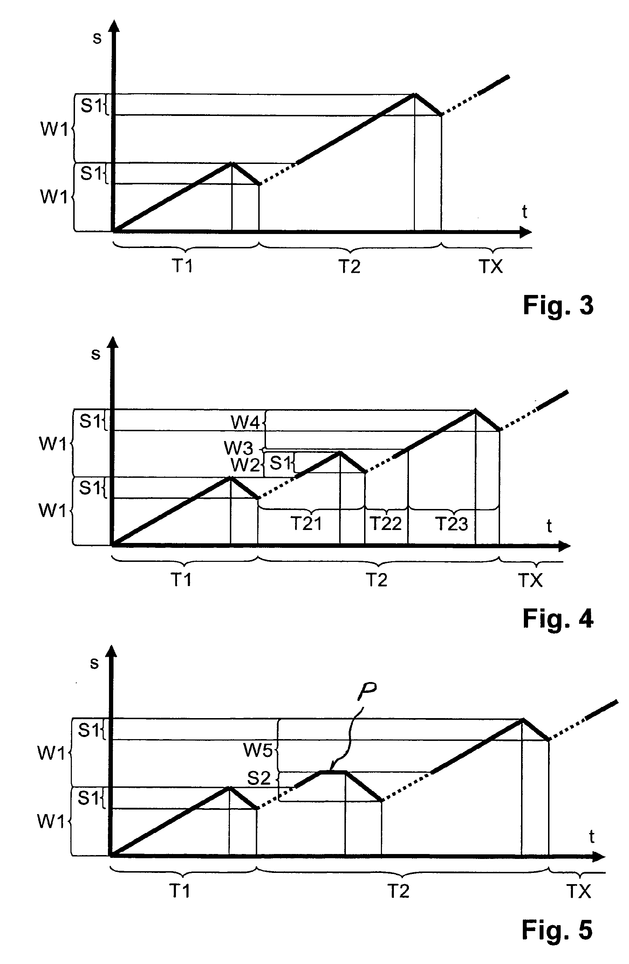

Das Steuerverfahren zum Steuern der Auspressvorrichtung 11 wird nachfolgend mit Bezug auf die Figuren 3 bis 5 dargelegt. Auf der Abzissenachse ist jeweils die Zeit t und auf der Ordinatenachse s ist jeweils der von der Kolbenstange 13 zurückgelegte Weg dargestellt.

Nach dem Einlegen eines neuen oder eines teilgebrauchten Gebindes 6 in den Aufnahmeraum 12 der Auspressvorrichtung 11 wird vor dem eigentlichen Ausbringen der auszupressenden Masse am Applikationsort eine Menge derselben ausgebracht. Dieser vorgängig ausgebrachte Anteil beziehungsweise Verwurf der auszupressenden Masse dient insbesondere dem Füllen der Austrittsöffnung 7 und z. B. eines darin befindlichen Mischelementes.

Zum Ausbringen des Verwurfs wird die Dosiereinstelleinheit 41 vorteilhaft auf die Stellung "unendlich" gestellt und das Betätigungselement 26 solange betätigt, bis die Qualität der ausgebrachten Masse den gewünschten Erfordernissen entspricht. Üblicherweise reichen zwei bis drei hintereinander erfolgende Vorschübe der Kolbenstange 13 dazu aus.

Alternativ wird an der Dosiereinstelleinheit 41 direkt zu Beginn die gewünschte Dosierung eingestellt und mittels zwei bis vier Hüben der Verwurf mit der Auspressvorrichtung 11 ausgebracht.

Wurde der Verwurf auf der Stellung "unendlich" der Dosiereinstelleinheit 41 ausgebracht, wird anschliessend mittels der Dosiereinstelleinheit 41 die pro vollständig ausgeführten Hub auszubringende Menge der Masse eingestellt. Aufgrund der bekannten Abmessungen des Gebindes und der bekannten Eigenschaften der auszupressenden Masse wird entsprechend dieser Voreinstellung von der Steuereinheit 31 der erforderliche Weg W1 bestimmt, um welchen die Kolbenstange 13 vorgeschoben werden muss. Bei der Betätigung des Betätigungselementes 26 sendet dieses ein Steuersignal an die Steuereinheit 31, worauf die Leistungsbaugruppe 32 den Motor 21 mit der Stromversorgung 19 verbindet. Die Abtriebswelle des Motors 21 treibt über die Getriebeanordnung das mit der Zahnung der Kolbenstange 13 kämmende Antriebsrad 23 an, worauf die Kolbenstange 13 um den Weg W1 vorgeschoben wird (siehe Fig. 3). Die Leistungsbaugruppe 32 der Steuereinheit 31 verbindet erst dann den Motor 26 mit der Stromversorgung 19, wenn bei der Betätigung des Betätigungselementes 26 ein vordefinierter Schwellwert überschritten wird.

Die Betätigungszeit des Betätigungselementes 26, welche der Dauer des Gedrückthaltens des Betätigungselementes 26 entspricht, wird in diesem Beispiel erst nach dem Ausbringen des Verwurfs durch die Steuereinheit 31 erfasst. Überschreitet dabei die Betätigungszeit des Betätigungselementes 26 eine vorbestimmte Zeitdauer von beispielsweise einer Sekunde, wird nach Erreichen des Weges W1 die Kolbenstange 13 durch automatisches Umschalten des Motors 21 um einen definierten Rückfahrweg S1 zurückgefahren. Dabei wird der beim Auspressvorgang erzeugte Überdruck im Gebinde 6 abgebaut und ein Nachfliessen der auszupressenden Masse nach Beendigung dieses Auspressvorgangs aus der Austrittsöffnung 7 verhindert.

Bei einer erneuten Betätigung des Betätigungselementes 26 wird die Kolbenstange 13 um die Summe aus dem aus der Voreinstellung resultierenden Weg W1 und dem zuvor erfolgten Rückfahrweg S1 vorwärtsbewegt, womit trotz dem vorgängig durchgeführten Zurückfahren der Kolbenstange 13 die entsprechend der Voreinstellung definierte Menge der auszupressenden Masse ausgebracht wird.

Die vorgenannten Schritte werden solange wiederholt, bis die gewünschte Totalmenge der auszupressenden Masse ausgebracht ist.

Die Position der Kolbenstange 13 wird über die Positionserfassungseinheit 46 nach Beendigung jeder Vorwärtsbewegung erfasst. Wurde die Kolbenstange 13, z. B. zum Einlegen eines neuen Gebindes 6 in den Aufnahmeraum 12 der Auspressvorrichtung 11 ganz zurückgezogen und wurde bei der Betätigung des Betätigungselementes 26 die Kolbenstange 13 nur um einen geringen Weg vorgeschoben, wird der dann durchzuführende Rückfahrweg entsprechend dem maximal zur Verfügung stehenden Weg durch die Steuereinheit 31 angepasst, sofern dieser kleiner als der vorbestimmte Rückfahrweg S1 ist. Dadurch wird verhindert, dass sich die Kolbenstange 13 und insbesondere das Druckstück 14 sich mit dem Gehäuse 17 verklemmt beziehungsweise mit diesem verspannt.

Gemäss der Figur 4 wird der erste Auspressvorgang T1 durchgeführt und anschliessend der zweite Auspressvorgang T2 vom Anwender z. B. durch Loslassen des Betätigungselementes 26 unterbrochen, nach dem die Kolbenstange 13 die Summe aus dem zuvor erfolgten Rückfahrweg S1 und W2 zurückgelegt hat und bevor der Hub vollständig durchgeführt ist. Es wurde nur ein Teilauspressvorgang T21 des gesamten Auspressvorgangs T2 durchgeführt. Da das Betätigungselement 26 bei dem Teilauspressvorgang T21 länger als die vorbestimmte Zeitdauer betätigt wurde, wird die Kolbenstange 13 um den vorbestimmten Rückfahrweg S1 zurückgefahren.

Bei einer erneuten Betätigung des Betätigungselementes 26 wird die Kolbenstange 13 um die Summe aus dem zuvor erfolgten Rückfahrweg S1 und W3 vorgefahren, als der Anwender das Betätigungselement 26 wieder loslässt. Es wurde nur ein Teilauspressvorgang T22 des gesamten Auspressvorgangs T2 durchgeführt. Da hier die Betätigungszeit des Betätigungselementes 26 unter dem Wert der vorbestimmten Zeitdauer lag, ist keine Entlastung des Gebindes erforderlich und es erfolgt kein automatisches Zurückfahren der Kolbenstange 13.

Bei einer weiteren Betätigung des Betätigungselementes 26 wird die Kolbenstange 13 nur noch um den W4 vorgefahren, da dann der über die Einstellung der Dosiereinstelleinheit 41 definierte Weg W1 vollständig von der Kolbenstange 13 während dem Auspressvorgangs T2 durchgeführt wurde und somit die gewünschte Menge der auszupressenden Masse ausgebracht ist. Da beim Teilauspressvorgang T23 die Betätigungszeit des Betätigungselementes 26 die vorbestimmte Zeitdauer überschritten hat, erfolgt wieder ein automatisches Zurückfahren der Kolbenstange 13 um den Betrag des Rückfahrwegs S1.

Anschliessend wird bei einer erneuten Betätigung des Betätigungselementes 26 ein weiterer Auspressvorgang TX gestartet, der in einmal, wie beim Auspressvorgang T1 oder auch in mehreren Teilschritten wie der Auspressvorgang T2 erfolgen kann.

In der Figur 5 ist das Steuerverfahren gezeigt, wenn während einem Auspressvorgang T2 z. B. von der Positionserfassungseinheit 46 ein Stillstand der Vorwärtsbewegung der Kolbenstange 13 vor der Beendigung des vollständig durchgeführten Hubs während dem zweiten Auspressvorgangs T2 erkannt (Plattform P) wurde. Der Motor 26 wird für eine Zurückbewegung der Kolbenstange 13 um einen vorbestimmten Rückfahrweg S2 automatisch umgeschaltet, wobei dieser Rückfahrweg S2 grösser als der vorbestimmte Rückfahrweg S1 ist, welcher bei einem Überschreiten der vorbestimmten Zeitdauer der Betätigungszeit des Betätigungselementes 26 automatisch ausgeführt wird. Bei einer erneuten Betätigung des Betätigungselementes 26 wird dann die Kolbenstange 13 um die Summe aus dem noch verbleibenden Weg W5 und dem Rückfahrweg S2 vorgeschoben, so dass nach Beendigung des Auspressvorgangs T2 der gewünschte Mengenanteil der auszupressenden Masse ausgebracht wird.

In den Diagrammen wurden jeweils die Varianten des Steuerverfahrens beispielhaft anhand des zweiten Auspressvorgangs T2 dargelegt. Selbstverständlich erfolgen diese Varianten des Steuerverfahrens auch bei dem ersten oder einem der nachfolgenden Auspressvorgänge TX, wenn eine oder mehrere der vorgenannten Situationen auftreten.

## Patentansprüche

1. Steuerverfahren zum Steuern einer Auspressvorrichtung für Massen enthaltende Gebinde (6) mit einem Aufnahmeraum (12) für das Gebinde (6),
mit zumindest einer gegenüber dem Aufnahmeraum (12) verschiebbaren Kolbenstange (13),
mit einem Motor (21) zum Bewegen der zumindest einen Kolbenstange (13),
mit einem Betätigungselement (26) zum Erzeugen eines Steuersignals beim Betätigen des Betätigungselementes (26) und
mit einer Steuereinheit (31) zum Steuern des Motors (21), welche eine Leistungsbaugruppe (32) zum Verbinden des Motors (21) mit einer Stromversorgung (19) sowie einen separaten Signaleingang (33) aufweist, der mit dem Betätigungselement (26) elektrisch verbunden ist, wobei die Leistungsbaugruppe (32) entsprechend auf das Steuersignal an diesem Signaleingang (33) den Motor (21) mit der Stromversorgung (19) verbindet,
wobei das Steuerverfahren die folgenden Schritte umfasst:
a) Erfassen der Betätigungszeit des Betätigungselementes (26) durch die Steuereinheit (31);
b) automatisches Ansteuern des Motors (21) durch die Steuereinheit (31) zum Zurückbewegen der zumindest einen Kolbenstange (13) um einen vorbestimmten Rückfahrweg (S1), sofern die Betätigungszeit eine vorbestimmte Zeitdauer überschreitet,
**dadurch gekennzeichnet, dass**
dass die Position der zumindest einen Kolbenstange (13) nach Beendigung der Vorwärtsbewegung erfasst wird und der durchzuführende Rückfahrweg (S1) entsprechend dem maximal zur Verfügung stehenden Weg angepasst wird, sofern dieser kleiner als der vorbestimmte Rückfahrweg (S1) ist.

2. Steuerverfahren nach Anspruch 1, **dadurch gekennzeichnet, dass** das Betätigungselement (26) zusätzlich ein Geschwindigkeitsregler ist.

3. Steuerverfahren nach Anspruch 1 oder 2, **dadurch gekennzeichnet, dass** eine Dosiereinstelleinheit (41) zur Einstellung der pro vollständig durchgeführten Hub auszubringenden Menge der Masse vorgesehen ist, welche über einen separaten Signaleingang (34) an der Steuereinheit (31) mit dieser elektrisch verbunden ist.

4. Steuerverfahren nach einem der Ansprüche 1 bis 3, **dadurch gekennzeichnet, dass** eine Positionserfassungseinheit (46) zum Erfassen der Position der zumindest einen Kolbenstange (13) vorgesehen ist, welche über einen separaten Signaleingang (35) an der Steuereinheit (31) mit dieser elektrisch verbunden ist.

5. Steuerverfahren nach einem der Ansprüche 1 bis 4, **dadurch gekennzeichnet, dass** eine Anzeigeeinheit (51) vorgesehen ist, welche mit der Steuereinheit (31) elektrisch verbunden ist und welche nach Erreichen des vollständig durchgeführten Hubs ein von dem Anwender wahrnehmbares Signal erzeugt.

6. Steuerverfahren nach Anspruch 5, **dadurch gekennzeichnet, dass** die Anzeigeeinheit (51) ein akustisches Signal erzeugt.

7. Steuerverfahren nach einem der Ansprüche 1 bis 6, **dadurch gekennzeichnet, dass** der Steuereinheit (31) zumindest ein Spannungsregler (56) vorgeschaltet ist.

8. Steuerverfahren nach Anspruch 3, **dadurch gekennzeichnet, dass** über die Dosiereinstelleinheit (41) die pro vollständig durchgeführten Hub auszubringende Menge der Masse eingestellt wird und bei einer erneuten Betätigung des Betätigungselementes (26) die zumindest eine Kolbenstange (13) um die Summe aus dem aus der Voreinstellung resultierenden Weg (W1) und dem zuvor erfolgten Rückfahrweg (S1) vorwärtsbewegt wird.

9. Steuerverfahren nach Anspruch 8, **dadurch gekennzeichnet, dass** nach dem Loslassen des Betätigungselementes (26), bevor der Hub vollständig durchgeführt ist, bei einer erneuten Betätigung des Betätigungselementes (26) die zumindest eine Kolbenstange (13) maximal um die Summe aus dem verbleibenden Restweg sowie dem etwaig durchgeführten Rückfahrweg vorgeschoben wird.

10. Steuerverfahren nach einem der Ansprüche 1 bis 9, **dadurch gekennzeichnet, dass** bei Erfassen eines Stillstandes der Vorwärtsbewegung der zumindest einen Kolbenstange (13) vor der Beendigung des vollständig durchgeführten Hubs der Motor (21) für eine Zurückbewegung der zumindest einen Kolbenstange (13) um einem vorbestimmten Rückfahrweg automatisch umgeschaltet wird.

11. Steuerverfahren nach Anspruch 10, **dadurch gekennzeichnet, dass** der Rückfahrweg bei einem Stillstand der Kolbenstange (13) vor der Beendigung des vollständig durchgeführten Hubs grösser als bei einer die vorbestimmte Zeitdauer überschreitende Betätigungszeit des Betätigungselementes (26) ist.

12. Steuerverfahren nach einem der Ansprüche 1 bis 11, **dadurch gekennzeichnet, dass** die Leistungsbaugruppe (32) der Steuereinheit (31) erst dann den Motors (21) mit der Stromversorgung (19) verbindet, wenn bei der Betätigung des Betätigungselementes (26) ein vordefinierter Schwellwert überschritten wird.

## Claims

1. Control method for controlling a dispensing device for paste containers (6) with a receiving space (12) for the container (6),
with at least one piston rod (13) displaceable with respect to the receiving space (12),
with a motor (21) for moving the at least one piston rod (13),
with an actuating element (26) for generating a control signal upon actuation of the actuating element (26), and
with a control unit (31) for controlling the motor (21), comprising a power unit (32) for connecting the motor (21) to a power supply (19) and a separate signal input (33) electrically connected to the actuating element (26), the power unit (32) connecting the motor (21) to the power supply (19) in response to the control signal at this signal input (33),
wherein the control method comprises the following steps:
a) recording of the actuation time of the actuating element (26) by the control unit (31);
b) automatic triggering of the motor (21) by the control unit (31) to retract the at least one piston rod (13) by a predetermined reverse travel (S1), if the actuation time exceeds a predetermined time period,
**characterized in that**
the position of the at least one piston rod (13) after completing its forwards movement is detected and the reverse travel (S1) to be effected is adjusted to suit the maximum distance available if the latter is smaller than the predetermined reverse travel (S1).

2. Control method according to Claim 1, **characterized in that** the actuating element (26) is also a speed regulator.

3. Control method according to Claim 1 or Claim 2, **characterized in that** a dosage setting unit (41) is provided for setting the quantity of paste to be dispensed per fully completed stroke, and is electrically connected to the control unit (31) via a separate signal input (34).

4. Control method according to any one of Claims 1 to 3, **characterized in that** a position detection unit (46) is provided for detecting the position of the at least one piston rod (13), and is electrically connected to the control unit (31) via a separate signal input (35).

5. Control method according to any one of Claims 1 to 4, **characterized in that** a display unit (51) is provided which is electrically connected to the control unit (31) and generates a signal to the user upon culmination of the full stroke.

6. Control method according to Claim 5, **characterized in that** the display unit (51) generates an audible signal.

7. Control method according to any one of Claims 1 to 6, **characterized in that** a voltage regulator (56) is connected ahead of the control unit (31).

8. Control method according to Claim 3, **characterized in that** the quantity of paste to be dispensed per fully completed stroke is set by the dosage setting unit (41) and upon renewed actuation of the actuating element (26) the at least one piston rod (13) is moved forwards by the sum of the distance (W1) resulting from the initial setting and the reverse distance (S1) travelled.

9. Control method according to Claim 8, **characterized in that** once the actuating element (26) has been released before a stroke has been fully completed, renewed actuation of the actuating element (26) advances the at least one piston rod (13) by not more than the sum of the residual travel remaining and any reverse distance travelled.

10. Control method according to any one of Claims 1 to 9, **characterized in that** upon detection of a stop of the forwards motion of the at least one piston rod (13) before culmination of a full stroke, the motor (21) is automatically switched to reverse the at least one piston rod (13) through a predetermined reverse travel.

11. Control method according to Claim 10, **characterized in that** the reverse travel due to a stop of the piston rod (13) before culmination of a full stroke is greater than that due to an actuation of the actuating element (26) for a time exceeding the predetermined time period.

12. Control method according to any one of Claims 1 to 11, **characterized in that** the power unit (32) of the control unit (31) does not connect the motor (21) to the power supply (19) until a predefined threshold value has been exceeded upon actuation of the actuating element (26).

## Revendications

1. Procédé de commande, destiné à la commande d'un dispositif d'extraction pour des conteneurs (6) contenant des produits, comportant un réceptacle (12) pour le conteneur (6),
comprenant au moins une tige de piston (13), pouvant se déplacer par rapport au réceptacle (12),
comprenant un moteur (21), pour le déplacement d'au moins une tige de piston (13),
comprenant un élément d'actionnement (26), pour la génération d' un signal de commande lors de la mise en oeuvre de l'élément d'actionnement (26), et
comprenant une unité de commande (31), pour la commande du moteur (21), laquelle présente un module de puissance (32), pour la connexion du moteur (21) avec une alimentation de courant (19), ainsi qu'une entrée de signal (33) séparée qui est reliée électriquement avec l'élément d'actionnement (26), le module de puissance (32) reliant le moteur (21) avec l'alimentation de courant (19) en corrélation avec le signal de commande à cette entrée de signal (33),
le procédé de commande comprenant les étapes suivantes :
a) détermination de la durée d'actionnement de l'élément d'actionnement (26) par l'unité de commande (31) ;
b) démarrage automatique du moteur (21) par l'unité de commande (31) pour le mouvement d'au moins une tige de piston (13) vers sa place d'origine par un trajet de retour (S1) prédéterminé, dans la mesure où la durée d'actionnement dépasse une durée prédéterminée,
**caractérisé en ce que**
la position d'au moins une tige de piston (13) est décelée après la fin du mouvement vers l'avant et le trajet de retour (S1) à effectuer est ajusté en fonction du trajet maximal étant à disposition, dans la mesure où celui-ci est plus court que le trajet de retour (S1) prédéterminé.

2. Procédé de commande selon la revendication 1, **caractérisé en ce que** l'élément d'actionnement (26) est de manière complémentaire un régulateur de vitesse.

3. Procédé de commande selon les revendications 1 ou 2, **caractérisé en ce qu'**une unité de réglage du dosage (41), laquelle est reliée électriquement avec l'unité de commande (31) par l'intermédiaire d'une entrée de signal (34) séparée, est prévue pour le réglage de la quantité de produit à apporter pour une course totalement effectuée.

4. Procédé de commande selon l'une des revendications 1 à 3, **caractérisé en ce qu'**une unité de détection de la position (46) est prévue pour déceler la position d'au moins une tige de piston (13), laquelle unité est reliée électriquement avec celle-ci par une entrée de signal (35) séparée sur l'unité de commande (31).

5. Procédé de commande selon l'une des revendications 1 à 4, **caractérisé en ce qu'**une unité d'affichage (51) est prévue, laquelle est reliée électriquement avec l'unité de commande (31) et laquelle génère un signal pouvant être capté par l'utilisateur après la réalisation d'une course totalement effectuée.

6. Procédé de commande selon la revendication 5, **caractérisée en ce que** l'unité d'affichage (51) génère un signal acoustique.

7. Procédé de commande selon l'une des revendications 1 à 6, **caractérisé en ce qu'** au moins un régulateur de tension (56) est branché avant l'unité de commande (31).

8. Procédé de commande selon la revendication 3, **caractérisé en ce que** la quantité de produit à apporter pour une course totalement effectuée est réglée par l'unité de réglage du dosage (41) et pour un nouvel actionnement de l'élément d'actionnement (26), l'une au moins tige de piston (13) est déplacée vers l'avant à raison de l'équivalent de la somme du trajet résultant du préréglage (W1) et du trajet de retour (S1) réalisé auparavant.

9. Procédé de commande selon la revendication 8, **caractérisé en ce qu'**après le relâchement de l'élément d'actionnement (26), avant que la course ne soit totalement effectuée, pour un nouvel actionnement de l'élément d'actionnement (26), la au moins une tige de piston (13) est déplacée vers l'avant au maximum à raison de l'équivalent de la somme du trajet résiduel à parcourir ainsi que du trajet de retour éventuellement effectué.

10. Procédé de commande selon l'une des revendications 1 à 9, **caractérisé en ce que** lorsqu'un arrêt du déplacement vers l'avant de la au moins une tige de piston (13) avant la fin de la course totalement effectuée est décelé, le moteur (21) est commuté automatiquement pour un mouvement de retour de la au moins une tige de piston (13) équivalent à un trajet de retour prédéterminé.

11. Procédé de commande selon la revendication 10, **caractérisé en ce que** le trajet de retour pour un arrêt de la tige de piston (13) avant la fin de la course totalement effectuée est supérieur à celui pour une durée d'actionnement de l'élément d'actionnement (26) dépassant une durée prédéterminée.

12. Procédé de commande selon l'une des revendications 1 à 11, **caractérisé en ce que** le module de puissance (32) de l'unité de commande (31) ne connecte le moteur (21) avec l'alimentation de courant (19) que lorsqu'une valeur limite prédéfinie est dépassée lors de l'actionnement de l'élément d'actionnement (26).
